(19) **Europäisches Patentamt European Patent Office Office européen des brevets**

(11) **EP 4 594 815 B1**

(12) **EUROPEAN PATENT SPECIFICATION**

(45) Date of publication and mention
of the grant of the patent:
**17.06.2026 Bulletin 2026/25**

(21) Application number: **23789343.3**

(22) Date of filing: **29.09.2023**

(51) International Patent Classification (IPC):
***G02C 7/04*** *(2006.01)*

(52) Cooperative Patent Classification (CPC):
**G02C 7/044; G02C 2202/24**

(86) International application number:
**PCT/GB2023/052525**

(87) International publication number:
**WO 2024/069185 (04.04.2024 Gazette 2024/14)**

(54) **CONTACT LENSES AND METHODS RELATING THERETO**

KONTAKTLINSEN UND ZUGEHÖRIGE VERFAHREN

LENTILLES DE CONTACT ET PROCÉDÉS ASSOCIÉS

(84) Designated Contracting States:
**AL AT BE BG CH CY CZ DE DK EE ES FI FR GR HR HU IE IS IT LI LT LU LV MC ME MK MT NL NO PL PT RO RS SE SI SK SM TR**

(30) Priority: **29.09.2022 US 202263411402 P**

(43) Date of publication of application:
**06.08.2025 Bulletin 2025/32**

(73) Proprietor: **CooperVision International Limited Fareham PO15 5RL (GB)**

(72) Inventors:
• **WEBBER, Martin**
  **Eastleigh Hampshire SO53 4LY (GB)**
• **CHAMBERLAIN, Paul**
  **Pleasanton, California 94588 (US)**
• **ARUMUGAM, Baskar**
  **Pleasanton, California 94588 (US)**
• **BRADLEY, Arthur**
  **Pleasanton, California 94588 (US)**

(74) Representative: **Abel & Imray LLP Westpoint Building James Street West Bath BA1 2DA (GB)**

(56) References cited:
**EP-A1- 3 290 994        WO-A1-2022/129927
US-A1- 2010 321 632    US-A1- 2019 227 342
US-A1- 2022 296 361**

**Description**

<u>Technical Field</u>

The present invention relates to contact lenses. The present invention relates especially, but not exclusively, to contact lenses for slowing the progression of myopia. The present invention also relates especially, but not exclusively, to contact lenses for use by presbyopes. The present invention also relates to methods of manufacturing such lenses.

<u>Background</u>

Many people, including children and adults require contact lenses to correct for myopia (short-sightedness) and many adults may require lenses to correct for presbyopia (an age-related inability to accommodate and hence inability to focus on near objects).

Uncorrected myopic eyes focus incoming light from distant objects to a location in front of the retina. Consequently, the light converges towards a plane in front of the retina and diverges towards, and is out of focus upon arrival at, the retina. Conventional lenses (e.g., spectacle lenses and contact lenses) for correcting myopia reduce the convergence (for contact lenses), or cause divergence (for spectacle lenses) of incoming light from distant objects before it reaches the eye, so that the location of the focus is shifted onto the retina.

The internal lenses of presbyopic eyes do not change shape to add the required power necessary to focus on near objects. Conventional lenses (e.g., spectacle lenses and contact lenses) for correcting presbyopia include the missing extra plus power in bifocal or progressive lenses, which include regions that are optimised for near vision and regions that are optimised for distance vision. Presbyopia may also be treated using bifocal or multifocal lenses, or monovision lenses (wherein different prescription are provided for each eye, one eye being provided with a distance vision lens, and one eye being provided with a near vision lens).

It was suggested several decades ago that progression of myopia in children or young people could be slowed or prevented by under-correcting, i.e., moving the focus towards but not quite onto the retina. However, that approach necessarily results in degraded distance vision compared with the vision obtained with a lens that fully corrects for myopia. Moreover, it is now regarded as doubtful that under-correction is effective in controlling developing myopia. A more recent approach to correct for myopia is to provide lenses having both one or more regions that provide full correction of distance vision and one or more regions that under-correct, or deliberately induce, myopic defocus. It has been suggested that this approach can prevent or slow down the development or progression of myopia in children or young people, whilst providing good distance vision.

In the case of lenses having regions that provide defocus, the regions that provide full-correction of distance vision are usually referred to as base power regions and the regions that provide under-correction or deliberately induce myopic defocus are usually referred to as myopic defocus regions or add power regions (because the dioptric power is more positive, or less negative, than the power of the distance regions). A surface (typically the anterior surface) of the add power region(s) has a smaller radius of curvature than that of the distance power region(s) and therefore provides a more positive or less negative power to the eye. The add power region(s) are designed to focus incoming parallel light (i.e., light from a distance) within the eye in front of the retina (i.e., closer to the lens), whilst the distance power region(s) are designed to focus light and form an image at the retina (i.e., further away from the lens).

A known type of contact lens that reduces the progression of myopia is a dual-focus contact lens, available under the name of MISIGHT (CooperVision, Inc.). This dual-focus lens is different than bifocal or multifocal contact lenses configured to improve the vision of presbyopes, in that the dual-focus lens is configured with certain optical dimensions to enable a person who is able to accommodate to use the distance correction (i.e., the base power) for viewing both distant objects and near objects. The treatment zones of the dual-focus lens that have the add power also provide a myopically defocused image at both distant and near viewing distances.

Whilst these lenses have been found to be beneficial in preventing or slowing down the development or progression of myopia, annular add power regions can give rise to unwanted visual side effects. Light that is focused by the annular add power regions in front of the retina diverges from the focus to form a defocused annulus at the retina. Under some circumstances, wearers of these lenses therefore may see a ring or 'halo' surrounding images that are formed on the retina, particularly for small bright objects such as street lights and car headlights. Also, rather than using the natural accommodation of the eye (i.e., the eye's natural ability to change focal length) to bring nearby objects into focus, in theory, wearers can make use of the additional focus in front of the retina that results from the annular add power region to focus near objects; in other words, wearers can inadvertently use the lenses in the same manner as presbyopia correction lenses are used, which is undesirable for young subjects and may compromise their ability to slow myopia progression by removing the myopically defocused light.

Further lenses have been developed which can be used in the treatment of myopia, and which are designed to eliminate the halo that is observed around focused distance images. In these lenses, the annular region is configured such that no single, on-axis image is formed in front of the retina, thereby preventing such an image from being used to avoid the need for the eye to accommodate near targets. Rather, distant point light sources are imaged by the annular region to a ring-shaped focal line at a near add power focal surface, preventing a useful image from being generated at this plane. The second advantage of this type of lens is that the rays forming the ring image can overlap when reaching the retina leading to a small spot size of light, without a surrounding 'halo' effect, on the retina.

For treating myopia, it is recognised that it may be beneficial to provide a lens that introduces additional myopic defocus. For treating presbyopia, it may be beneficial to provide a lens that gives rise to an extended depth of focus. Contact lenses of the prior art are disclosed in US2022/296361A1.

Summary

According to a first aspect, the invention relates to a contact lens as defined in claim 1.

According to a second aspect, the invention also relates to a method according to claim 17.

It will of course be appreciated that features described in relation to one aspect of the present disclosure may be incorporated into other aspects of the present disclosure according to the appended claims.

Description of the Figures

Embodiments of the present invention will now be described by way of example only with reference to the accompanying schematic drawings of which:

FIG. 1A is a top view of a prior art contact lens for use in the prevention of myopia;
FIG. 1B is a side view of the contact lens of FIG. 1A;
FIG. 2A is a ray diagram for the lens of FIG. 1A;
FIG. 2B shows a light pattern at a proximal focal surface of the lens of FIG. 1A formed from a distant point source;
FIG. 2C shows a light pattern at a distal focal surface of the lens of FIG. 1A formed from a distant point source;
FIG. 3A is a top view of a different contact lens having non-coaxial optics;
FIG. 3B is a side view of the contact lens of FIG. 3A
FIG. 4A is a ray diagram for the lens of FIG. 3A and 3B;
FIG. 4B shows a light pattern at a proximal focal surface of the lens of FIG. 3A and 3B formed from a distant point source;
FIG. 4C shows a light pattern at a distal focal surface of the lens of FIG. 3A and 3B formed from a distant point source;
FIG. 4D is a partial ray diagram for the lens of FIG. 3A and 3B together with circles indicating the radii of curvature of the central distance region (solid line) and the annular add region (dashed line) of the contact lens.
FIG. 5A is a plot showing the variation in sagittal power for the lens shown in FIGS. 1A and 1B and the lens shown in FIGS. 3A and 3B;
FIG. 5B is a plot showing the variation in curvature power for the lens shown in FIGS. 1A and 1B and the lens shown in FIGS. 3A and 3B;
FIG. 6A is a top view of a lens according to an embodiment of the present disclosure;
FIG. 6B is a side view of the contact lens of FIG. 6A
FIG. 7 is a plot showing the variation in sagittal power and curvature power for the lens shown in FIG. 6A and 6B;
FIG. 8 is a ray diagram for the lens of FIG. 6A and 6B;
FIG. 9A is a top view of a lens according to an embodiment of the present disclosure;
FIG. 9B is a side view of the contact lens of FIG. 9A;
FIG. 10 is a plot showing the variation in sagittal power and curvature power for the lens shown in FIG. 9A and 9B;
FIG. 11 is a ray diagram for the lens of FIG. 9A and 9B;
FIG. 12A is a top view of a lens according to an embodiment of the present disclosure;
FIG. 12B is a side view of the contact lens of FIG. 12A;
FIG. 13 is a plot showing the variation in sagittal power and curvature power for the lens shown in FIG. 12A and 12B;
FIG. 14 is a ray diagram for the lens of FIG. 12A and 12B; and
FIG. 15 is a flow chart showing a method of manufacturing a lens according to an embodiment of the present disclosure;

Detailed Description

According to a first aspect, the present disclosure provides a contact lens. The lens includes an optic zone comprising a central region, the central region having a first optical axis, a centre of curvature that is on the first optical axis, and a diameter that is less than 2.0 mm but less than 1.0 according to the claimed subject-matter. The optic zone comprises an annular region, wherein the annular region comprises a plurality of concentric treatment zones. Each treatment zone has a radial sagittal power profile that increases with increasing radial distance from the optical axis.

As used herein, the term contact lens refers to an ophthalmic lens that can be placed onto the anterior surface of the eye. It will be appreciated that such a contact lens will provide clinically acceptable on-eye movement and not bind to the eye or eyes of a person. The contact lens may be in the form of a corneal lens (e.g., a lens that rests on the cornea of the eye). The contact lens may be a soft contact lens, such as a hydrogel contact lens or a silicone hydrogel contact lens. The lens may be a lens for use in preventing or slowing the development or progression of myopia. The lens may be a lens for use in providing an extended depth of focus to a presbyopic eye.

A contact lens according to the present disclosure comprises an optic zone. The optic zone encompasses the parts of the lens that have optical functionality. The optic zone is configured to be positioned over the pupil of an eye when in use. For contact lenses according to the present disclosure, the optic zone comprises a small central region, and an annular region that surrounds the central region. The optic zone may be surrounded by a peripheral zone. The peripheral zone is not part of the optic zone, but sits outside the optic zone and above the iris when the lens is worn, and it provides mechanical functions, for example, increasing the size of the lens thereby making the lens easier to handle, providing ballasting to prevent rotation of the lens, and/or providing a shaped region that improves comfort for the lens wearer. The peripheral zone may extend to the edge of the contact lens.

A contact lens according to an embodiment of the disclosure may include a ballast to orient the lens when positioned on the eye of a wearer. Embodiments of the disclosure incorporating a ballast into the contact lens will, when placed on the eye of a wearer, rotate under the action of the wearer's eyelid to a pre-determined angle of repose; for example, the ballast may be a wedge and the rotation may result from the action of the eyelid on the wedge. It is well-known in the art to ballast a contact lens to orient a contact lens; for example, toric contact lenses are ballasted to orient the lens so that the orthogonal cylindrical corrections provided by the lens align correctly for the astigmatism of the wearer's eye.

The contact lens may be substantially circular in shape and have a diameter from about 4 mm to about 20 mm. The optic zone may be substantially circular in shape and may have a diameter from about 2 mm to about 10 mm. In some embodiments, the contact lens has a diameter from 13 mm to 15 mm, and the optic zone has a diameter from 7 mm to 9 mm.

The first optic axis may lie along the centreline of the lens. The first optical axis is defined with reference to a distant point source of light. Light from a distant point source that is on the optical axis of the lens (which may hereafter be referred to as an on-axis distant point source) will be focussed onto the optical axis of the lens. The central region may have a substantially circular shape. The central region may have a substantially oval or elliptical shape. The central region has a diameter of less than 1 mm. less than 0.5 mm, or less than 0.25 mm. If the central region is substantially elliptical or oval in shape, the maximum diameter is according to the claimed subject-matter less than 1.0 mm or less than 0.5 mm, or less than 0.25 mm.

The annular region may extend radially outwards from a perimeter of the central region. The perimeter of the central region may define a boundary between the central region and the annular region, and the annular region may therefore be adjacent to the central region. The annular region may be a substantially annular region that surrounds the optic zone. It may have a substantially circular shape or a substantially elliptical shape. It may fully surround the optic zone. It may partially surround the optical zone.

The annular region comprises a plurality of concentric treatment zones. The annular region may comprise between 2 and 10 concentric treatment zones, preferably between 4 and 8 concentric treatment zones. Each treatment zone may have a radial width of between about 0.1 and 2.5 mm, preferably between about 0.2 and 1.2 mm, more preferably between about 0.3 and 1.0 mm. Each treatment zone may have the same radial width. The treatment zones may have different radial widths.

Each treatment zone may directly abut an adjacent treatment zone, i.e., an outer perimeter of a first treatment zone may define a boundary between the first treatment zone and a second treatment zone. The second treatment zone may therefore be adjacent to the first treatment zone.

In ophthalmology, the word "sagittal" is used in two different ways, in describing oblique astigmatism and in describing optical surfaces.

In general optics, the word "sagittal" is used when describing oblique astigmatism. Oblique astigmatism occurs when rays from an off-axis location pass through a lens obliquely. The astigmatism is mostly attributable to the cosine compression that occurs in the meridian along which the rays originate, e.g., if the rays originate from the horizontal peripheral field, the surface (and hence radius of curvature) horizontally will appear to be cosine compressed, resulting in increased power in that meridian (and hence astigmatism). The power in that meridian is labelled "tangential" power and the power in the perpendicular meridian is labelled "sagittal" power. The astigmatism results in object points being imaged to two spatially separated and orthogonal line foci, the sagittal focal line and the tangential focal line.

The second use of the word "sagittal" originates in descriptions of optical surfaces, for example in ophthalmology, where it is central to the clinical measurement of the anterior eye surface (i.e., in corneal topography). Terms including "sagittal power", "slope power" and "axial power" are synonyms used interchangeably to describe the optical power of a surface of a lens obtained from the position at which rays passing through the surface cross the optical axis. In the paraxial approximation, the sagittal power is equal to the "power" of a lens.

An optical surface is typically defined by its radius, because the radius is linked directly to optical power (power = refractive index difference/radius). For most optical systems, in the paraxial approximation, we consider a surface to have a single radius (i.e., we assume it to be part of the surface of a sphere) but for the human eye, the anterior corneal surface is far from spherical, so a single radius is not sufficient to define such a surface because local radius changes along the surface. Similarly, ophthalmic lenses (e.g., contact lenses) that are non-spherical have a local radius that changes along the surface of the lens.

Because of the non-spherical characteristics of eye and contact lens optics, two definitions of radius are employed. The sagittal radius of curvature of a local surface is the distance to the point at which the normal to the surface crosses the optical axis; using a small angle approximation, this equates to the distance from the pupil centre to that point, and so the distance from the pupil centre is typically used

However, another radius, which should be considered for a complete picture of the optical power of the surface, is the local radius of curvature based upon the local curvature of the surface. (Sagittal radii are sometimes referred to as axial radii and local radii are sometimes referred to as instantaneous radii.)

Using the paraxial optics equation (power = refractive index difference/radius) the sagittal radius is used to calculate sagittal power and the local radius is used to calculate curvature power (which is also known as local power or instantaneous power, the latter alluding to its relationship with the local radius of curvature). Because sagittal optical power is determined by the slope of the optical surface, it is also referred to as slope-based power.

As explained further below, when describing optical wavefronts, the sagittal power is defined as the slope of the wavefront divided by the radial distance (r) from the optical axis of the lens (typically the centre of the lens), i.e., it is related to the first derivative of the wavefront. The (local) curvature power is defined by the second derivative of the wavefront.

Sagittal power and curvature power can be similar for low aberration optics (e.g. single vision lenses). For a wavefront W, at a point a radial distance r from a line normal to the centre of the wavefront (typically the centre of the lens),

$W(r) = A*r^2$, where A is a function. The curvature power is $\dfrac{\partial^2 W}{\partial r^2}$, and for a simple spherical lens, is $\dfrac{\partial(2Ar)}{\partial r} = 2A$. The

sagittal power is $\dfrac{1}{r}\dfrac{\partial W}{\partial r}$, and for a simple spherical lens is $= \dfrac{2Ar}{r} = 2A$. Thus, for a simple lens with spherical wavefront, with paraxial assumptions, $P_C = P_S$.

However, the values of the slope and the curvature powers can be very different from each other for some recently developed myopia-control lenses that employ "non-coaxial optics". These lenses have surface regions that focus light from an on-axis source onto regions displaced from the optical axis, so that the distance at which the local ray bundles come to a focus can be very different from the distance at which they cross the axis. For these types of lenses, the distinction between sagittal (axial) and curvature (local) power becomes important. With non-coaxial optics, a description of the curvature power does not provide a complete description of the optics. Adjacent regions of a lens can have the same fixed curvature power but not fixed sagittal powers (rays from each zone cross the axis at different distances from the local focus distance and from each other). For a lens that includes non-coaxial lenslets, for example, the resulting sagittal and curvature power values differ significantly. A curvature power map of such a lens shows the consistent add power of each lenslet, but a sagittal power map reveals the declining sagittal power with increasing radial distance.

Sagittal power is directly linked to the ray location at the image plane (retina plane in the eye) and therefore directly linked with image quality. These relationships generally do not exist for curvature power when non-coaxial optics are implemented.

An example way, in practice, to measure the wavefront of light passing through an ophthalmic lens is to use an aberrometer, for example a Shack-Hartmann aberrometer. A Shack-Hartmann aberrometer includes a planar regular array of small lenses. In use, the wavefront to be measured is sampled by a two-dimensional array of small lenses (lenslets) each focusing a different part of the wavefront to a different focal spot. If the wavefront is planar, the spatial arrangement of the resulting point spread functions will mirror the arrangement of the lenses, so the lenses focus the wavefront to a corresponding regular array of focal spots.

However, if the wavefront is tilted, the array of focal spots will be shifted in X and Y, and in the presence of other optical aberrations the focal point array will not replicate the lenslet array geometry. Rather, a part of a non-planar wavefront will arrive at a lens at an angle (i.e. not at normal incidence) and so the lens focuses that part of the wavefront to a focal spot that is shifted transversely from where it would have been had the wavefront been planar. The size of the transverse shift depends upon the average local slope, relative to a planar wavefront, of the part of the wavefront that is imaged by the lens. The distances by which the focal points are shifted by the array of lenses thus provides a measurement of the wavefront slopes at corresponding parts of the wavefront.

The wavefront phase is estimated from the discrete slope measurements, typically using numerical fitting method or numerical integration. The more common approach is to fit the slope data with a series of polynomials that are themselves the differentials of a set of basis functions, the Zernike polynomials. The wavefront $W(x, y)$ is represented as a series of k polynomials $Z_n^k$ of order n, having coefficients $C_n^k$, thus:

$$W(x,y) = \sum_n \sum_k C_n^k Z_n^k \qquad (1)$$

Differentiating that expression provides the relationship between the slope of the wavefront and the differential of the Zernike polynomials:

$$\frac{\partial W(x,y)}{\partial x} = \sum_n \sum_k C_n^k \frac{\partial Z_n^k}{\partial x} \qquad (2)$$

$$\frac{\partial W(x,y)}{\partial y} = \sum_n \sum_k C_n^k \frac{\partial Z_n^k}{\partial y} \qquad (3)$$

The coefficients $C_n^k$ are obtained by fitting the differentiated Zernike polynomials to the measured wavefront slopes using (2) and (3). The wavefront $W(x, y)$ is thereby calculated as a series of Zernike basis functions $Z_n^k$ with the coefficients $C_n^k$ obtained by fitting the first derivatives of the basis functions to the measured wavefront slope data.

A second approach, typically applied to data that cannot be fitted by polynomials (e.g. where a lens power profile has abrupt local changes) employs numerical integration, for example by calculating the value at a point from the value at an adjacent point and the rate of change of that value at the adjacent point.

The effect of a given lens on the wavefront is measured by inserting the lens into the measurement path at a location optically conjugate with the lenslet array.

Thus, wavefront slopes may be measured at intervals across the lens, for example across the optic zone of a contact lens. A single-pass Shack-Hartmann aberrometer with a (monochromatic, i.e., narrow-band) 540nm light source, such as ClearWave® (available, from www.lumetries.com), may be used, for example, to measure wavefront slopes every 104 μm across a 10 mm aperture.

In the real world, measured wavefronts will not be ideal planar or spherical wavefronts. Aberrometer derived measures of optical wavefronts are typically quantified relative to standard reference cases, typically a plane wave or a spherical wave expected from the known power of a lens being measured. The former approach results in a wavefront error map including all optical power and aberrations (lower and higher order) of a lens.

However, often, the wavefront being measured is known not to be planar even in theory, for example because it is known to be a diverging or converging wavefront, for example from a lens with negative or positive power, respectively. Thus, in the aberrometer, the focal points obtained from a converging or diverging wavefront are expected to be shifted from the regular array and aberrations of a lens can be isolated by subtracting the expected spherical wavefront from the measured wavefront. Specifically, in the aberrometer, the measured shift of individual spot images will be different from the expected shift, and the wavefront error is calculated from those differences. The wavefront error map obtained by subtracting the expected spherical wavefront (due to a lens of specified power) from the measured wavefront does not include the optical power of that lens but can include lower order (prism, defocus and astigmatism) and higher order (e.g., coma and spherical aberration) aberrations.

As discussed above, numerical fitting or numerical integration methods may be used to compute wavefront error maps of the pupil from the measured wavefront slopes. The wavefront error maps may be corrected for prism (prism may be removed from the wavefront error data because it can corrupt the calculation of sagittal power).

With the wavefront error map oriented so that the principal curvature directions are horizontal (x) and vertical (y), the wavefront error W(x,y) has local horizontal and vertical slopes $\left(\frac{\partial W}{\partial x}, \frac{\partial W}{\partial y}\right)$ which may be obtained from the measured wavefront error, for example using numerical differentiation. Sagittal power (i.e., slope power or axial power) at each sampled location is here the wavefront error slope divided by the distance r of the sampled location from the lens centre; so, for example, radial sagittal power is defined as

$$P_{sagittal} = \frac{1}{r}\frac{\partial W}{\partial r}$$

where $r^2 = x^2 + y^2$.

Mean curvature power is defined as the local mean curvature of the wavefront error, i.e.

$$P_{curvature} = \frac{1}{2}\left(\frac{\partial^2 W}{\partial x^2} + \frac{\partial^2 W}{\partial y^2}\right).$$

The Laplacian operator $\nabla^2 = \frac{\partial^2}{\partial x^2} + \frac{\partial^2}{\partial y^2}$ averages the local curvature across all X-Y directions. The Laplacian curvature power is defined as being twice the mean curvature. The Laplacian curvature of a sphere of a given radius will be twice the Laplacian curvature of a cylinder having the same radius. (Similarly, the mean curvature of the sphere will be twice the mean curvature of the cylinder.)

The radial curvature power is defined as:

$$P_{curvature}^{radial} = \frac{\partial^2 W}{\partial r^2}$$

Similarly, the circumferential (or tangential) curvature power along the direction of changing angle $\theta$, orthogonal to the radius, is defined as:

$$P_{curvature}^{circumf} = \frac{\partial^2 W}{\partial \theta^2}$$

Consider, for example, a lens that has a central region having a sphere power and an annulus having an add power and surrounding the central region, wherein the annulus is a surface of a toroid, not a sphere, i.e., the add power is focused, not to a point on the optical axis, but rather to a ring of off-axis points. In the annulus, the radial curvature will be greater than the circumferential or tangential curvature. As described above, an aberrometer will typically subtract the sphere power of the lens. The remaining curvature is in a radial direction, across the annulus; circumferentially the curvature is flat (as the spherical curvature has been removed). A local x-y differentiator like the Laplacian operator, measures the average change in slope; in cases in which the residual circumferential change in curvature is zero after the sphere power is subtracted, the measured power will therefore be half the radial curvature, so the measured curvature power derived using the Laplacian operator is doubled to give the measured radial curvature power of the toroid.

In embodiments of the present disclosure, each treatment zone is radially tilted relative to the central zone. As a result, each treatment zone has a radial sagittal power profile that increases with increasing radial distance from the optical axis. The radial sagittal power profile of the central region may be approximately flat. Alternatively, the radial sagittal power profile across the central region may have a curved profile. The radial sagittal power profile across the central region may have a quadratic or parabolic shape. As used herein, the tilting of the treatment zones means radial tilting rather than lateral tilting. Thus, for example, in a radial cross section of the lens, an outer end of an arc defining the anterior surface of the first annular region may be displaced above or below its position in a corresponding un-tilted treatment zone. Correspondingly, in three dimensions, a circumferential boundary (formed by the ends of the radial arcs) of the treatment zones may be displaced above or below its position in a corresponding un-tilted treatment zone. In practice, the tilting may be embodied in the optical design of an anterior surface of the treatment zones of the lens. The tilting may alternatively be embodied in the optical design of a posterior surface of the treatment zones of the lens, or embodied in the optical design of both anterior and posterior surfaces of the treatment zones of the lens.

Radially tilting a treatment zone relative to the central zone shifts the centre of curvature of that treatment zone away from the optical axis. A larger radial tilt relative to the central region will give rise to a greater shift in the centre of curvature of the treatment zone, and a steeper gradient of the radial sagittal power profile. Light rays from a distant point source passing through a radially tilted treatment zone will not focus towards a single point on the optical axis, but instead, will focus towards an off-axis point. For an annular treatment zone having a constant radial sagittal power, light rays from a distant point source passing through a radially tilted treatment zone will form an annular ring at a focal surface. The diameter of the annular ring will depend, in part, on the tilt of the treatment zone relative to the central region. The diameter of the annular ring will also be dependent upon the radial distance of the treatment zone from the optical axis, and the radial add power of the treatment zone.

In a lens having concentric annular regions that provide focusing, light can be considered to be "focused" by the annular regions in two different ways.

In a first form of focusing, light is focused by the local curvature of the annular region. Considering a transverse 2D cross-section through the lens, and in the approximation of geometric optics, adjacent rays passing through the radial width of the annular region (i.e. through a single "side" of the annulus, i.e. through a portion of a radius between the inner circumference of the annular region and the outer circumference of the annular region) from a distant source are focused by the local curvature of the annular region to a point; and the points from each of the radial widths around the annulus together form a ring of focal points around the optic axis of the lens. This local focusing, resulting from the local curvature within the radial width of the annular region, is referred to herein as focusing and the surface containing the focal ring is referred to as a focal surface. The curvature power of the annular region depends on the degree of (local) focusing.

In a second form of focusing, light can be focused by the global curvature of one or more of the annuli taken together. Considering again a transverse 2D cross-section through the lens, and in the approximation of geometric optics, a light ray from a distant source that passes through the midpoint of the radial width of the annular region travels in a direction determined by the radial position of the annulus on the lens and the radial "tilt" of the annular region. The tilt can be selected to ensure that light rays passing through the midpoints of the radial width on opposite "sides" of the annulus converge to a point on the optic axis. When the lens includes a plurality of the annuli, the rays passing through the midpoints of the radial widths of all of the annuli can converge to the same point. The rays passing through the whole of the annulus (and not just the midpoints) can converge to a small spot at this point. In order to more clearly distinguish it from the first form of focusing, this global focusing, resulting from the curvature of the lens and the radial tilt of the annuli, is referred to herein as convergence and the surface containing the point to which the midpoints converge is referred to as a convergence surface. The sagittal power of the annular region depends on the degree of (global) convergence.

The terms focal surface and convergence surface, as used herein, do not refer to physical surfaces, but to surfaces that could be drawn through points where light from distant objects would be focused or reach a locally minimal spot size. The eye focuses light onto the retina, which is curved, and in a perfectly focused eye, the curvature of the surface would match the curvature of the retina, therefore the eye does not focus light onto a flat mathematical plane. However, in the art, the curved surface of the retina is commonly referred to as a plane.

In embodiments of the present disclosure, at least two of the treatment zones may have different radial sagittal power profiles. At the boundary between the central zone and a first, innermost annular zone there may be a change in gradient of the radial sagittal power profile. At the boundary between adjacent treatment zones there may be a change in gradient of the radial sagittal power. The annular region may comprise between 2 and 10 concentric treatment zones, preferably between 4 and 8 concentric treatment zones. Each treatment zone may have a different radial sagittal power profile. Alternatively, alternate treatment zones may have the same radial sagittal power profile. The radial sagittal power profile of each treatment zone may have a gradient of between about 0.5 D/mm and about 20.0 D/mm, preferably between about 0.5 D/mm and about 10.0 D/mm, more preferably between about 1.0 D/mm and about 5.0 D/mm. A first, innermost treatment zone (i.e., closest to the central region), may have a first radial sagittal power profile gradient. A second, adjacent treatment zone may have a second, different radial sagittal power profile gradient, and a third treatment zone adjacent to the second treatment zone may have the same radial sagittal power profile gradient as the first treatment zone. A first, innermost treatment zone (i.e., closest to the central region), may have a first radial sagittal power profile gradient, and a second, adjacent treatment zone may have a second, greater radial sagittal power profile gradient. The radial sagittal power profile gradient of any or all of the treatment zones may be dependent upon the radial distance of that treatment zone from the first optical axis. Treatment zones at a greater radial distance from the first optical axis may have a greater radial sagittal power profile gradient than treatment zones at a smaller radial distance from the optical axis. Treatment zones at a greater radial distance from the first optical axis may have a greater radial sagittal power profile gradient and a greater radial width than treatment zones at a smaller radial distance from the optical axis.

Radially tilting a treatment zone relative to the central region alters the radial sagittal power profile of that treatment zone, as this is a function of the first derivative of the wavefront, but it will not alter the radial curvature power of that treatment zone, which is a function of the second derivative of the wavefront.

For lenses according to embodiments of the present disclosure, the central region may have a substantially flat radial sagittal power profile. The radial sagittal power of the central region will be equal to the radial curvature power of the central region. This may hereafter be referred to as the base power of the central region. The radial sagittal power across the central region may have curved profile. The radial sagittal power profile across the central region may have a parabolic or quadratic shape.

Lenses according to embodiments of the present disclosure will have a nominal distance power (typically the power that is written on the contact lens packaging). The nominal distance power of the lens depends upon the position of a best distal focal surface, and this is dependent upon the path of light rays from distant point sources that pass through the treatment zones. As discussed above, light rays from a distant point source that pass through the midpoint of the radial width of each treatment zone (i.e. halfway across the radial width of each treatment zone) converge to a point centred on the optical axis and contained in a convergence surface. To a first approximation, a best distal focal surface may be defined as the convergence surface where the spot size of light passing through the radial width of each treatment zone is at its smallest. The position of this best distal focal surface determines the nominal distance power of the lens.

For lenses used in the treatment of myopia, the nominal distance power of the lens will be negative or close to zero. The nominal distance power may be between +0.5 diopters (D) and -15.0 D. The nominal distance power may be between -0.25 D to -15.0 D.

For lenses according to embodiments of the present disclosure, the central region may have a base power that is approximately equal to the nominal distance power. The central region may have a base power that is less than (i.e., less positive, or more negative) than the nominal distance power. The central region may have a radial sagittal power that varies with a curved profile. The average radial sagittal power across the central region may be approximately equal to the nominal distance power, or may be less than (i.e., less positive or more negative) than the nominal distance power. The average radial sagittal power across the central region may be more than (i.e., more positive or less negative) than the nominal distance power.

For lenses according to embodiments of the present disclosure, at least one treatment zone may have a radial curvature power that is greater than the nominal distance power of the lens. Each treatment zone may have a radial curvature power that is greater than the nominal distance power of the lens. Each treatment zone may therefore provide a radial curvature add power. Hereafter, the difference in radial curvature power of each treatment zone and the nominal distance power may be referred to as a radial curvature add power, or a curvature add power.

Increasing the radius of curvature of a treatment zone will alter the radial curvature power of that treatment zone, as this is a function of the second derivative of the wavefront. The radial curvature power of each treatment zone may be determined by the curvature of at least one surface of the annular region. The radial curvature power of each treatment zone may result from the curvature of an anterior surface and/or a posterior surface of the lens. Each treatment zone may have a greater curvature, or a smaller radius of curvature, than the central region. The anterior surface of each treatment zone may have a greater curvature, or smaller radius of curvature than the curvature of the central region. Alternatively, or additionally, the posterior surface of each treatment zone may have a greater curvature than the curvature of the central region.

The nominal distance power of the lens may be positive, and each treatment zone may have a curvature power that is more positive than the nominal distance power. In this case, light from a distant point source passing through each treatment zone will be focused towards an add power focal surface that is closer to the lens than the distal focal surface.

The nominal distance power of the lens may be negative, and each treatment zone may have a curvature power that is less negative than the nominal distance power, or each treatment zone may have a positive curvature power. Considering the lens positioned on the cornea, if the curvature power of a treatment zone is less negative than the base power, light from a distant point source passing through that treatment zone will be focused towards an add power focal surface that is more anterior in the eye than the distal focal surface. Considering the lens when it is not positioned on the cornea, if the curvature power of a treatment zone is positive, an add power focal surface will be on the opposite (image) side of the lens than the distal focal surface (which will be a virtual focal surface on the object side of the lens); if the curvature power of a treatment zone is negative (but less negative than the nominal distance power), a virtual add power focal surface will be further from the lens than a virtual distal focal surface.

For lenses according to embodiments of the present disclosure, the radial curvature power of the central region may be equal to, or approximately equal to, the nominal distance power. In this case, when the lens is on an eye, light from a distant point source passing through the central region may be focused to a spot on the first optical axis at a distal focal surface. Alternatively, the central region may have a radial curvature add power that is less than the nominal distance power. In this case, when the lens is on an eye, light from a distant point source passing through the central region may be focused to a spot on the first optical axis that is closer to the lens than the distal focal surface.

A first, innermost treatment zone may have a first radial curvature power value that is greater (i.e., more positive or less negative) than the nominal distance power. When the lens is positioned on an eye, a first, innermost, treatment zone may focus light from a distant point source towards a focal surface that is closer to the lens than the distal focal surface.

Each treatment zone may have a different radial curvature add power. The radial curvature power a first, innermost treatment zone may have a first value, and the radial curvature power of an adjacent, second treatment zone, positioned at a greater radial distance from the first optical axis may have a second, greater value. This may improve vision for a lens wearer. Alternatively, a second treatment zone, positioned at a greater radial distance from the first optical axis may have a second, smaller value. A first, innermost treatment zone may have a radial curvature add power of between +0.5 D and +20.0 D, preferably between about +2.0 and +10.0 D, more preferably between about +1.0 D and +5.0 D. A second, adjacent treatment zone may have a greater radial curvature add power of between +0.5 D and +20.0 D, preferably between +4.0 D and +20.0 D. The radial curvature add power of the treatment zones may alternate between a high radial curvature add power value, and a low radial curvature add power value, the high radial curvature power being greater than the nominal distance power of the lens. The high radial curvature add power value and the low radial curvature add power value may both be greater than the nominal distance power of the lens. The high radial curvature add power may be between +4.0 D and +20.0 D. The low radial curvature add power may be between +1.0 D and +5.0 D. For a lens on an eye, high radial curvature add power treatment zones will focus light from a distant point source towards the near focal surface that is closer to the lens than the distal focal surface. Low radial curvature add power treatment zones may focus light from a distant point source towards a middle focal surface that lies in between the near focal surface and the distal focal surface.

Alternatively, each treatment zone may have the same radial curvature add power. The radial curvature add power of each treatment zone may be greater than the nominal distance power.

At the boundaries between adjacent treatment zones, there may be a sharp, discontinuous increase or decrease in radial curvature power, depending upon the relative radial curvature add powers of the treatment zones

At the boundaries between adjacent treatment zones, there may be a sharp, discontinuous increase or decrease in radial sagittal power. At a point halfway across the radial width of a first, innermost treatment zone, the radial sagittal power may match the nominal distance power of the lens. At a point halfway across the radial width of all of the treatment zones, the radial sagittal power matches the nominal distance power of the lens.

The radial sagittal power is the same at a point halfway across the width of each treatment zone.

At any of the boundaries between adjacent treatment zones there may be a sharp increase in radial sagittal power. The radial sagittal power at a point halfway across the radial width of each treatment zone will be less than the radial curvature power of that treatment zone. At least one treatment zone may be a sagittal add treatment zone, having a radial sagittal power that is greater than the nominal distance power of the lens across the width of that treatment zone. For each treatment zone, the radial curvature power may be greater than the radial sagittal power across the width of the treatment zone. Sagittal add treatment zones are radially tilted in a manner such that the radial sagittal power is greater than the nominal distance power of the lens across the width of that treatment zone. The radial sagittal power across the width of a sagittal add treatment zone will be less than it would be for a co-axial, or on-axis treatment zone having the same radial curvature add power. For these treatment zones, light from a distant point source passing through the radial midpoint of the treatment zone will be focused towards a sagittal add power focal surface. For a lens on an eye, the sagittal add power focal surface will be closer to the lens than the distal focal surface for that lens.

The contact lens may comprise an elastomer material, a silicone elastomer material, a hydrogel material, or a silicone hydrogel material, or combinations thereof. As understood in the field of contact lenses, a hydrogel is a material that retains water in an equilibrium state and is free of a silicone-containing chemical. A silicone hydrogel is a hydrogel that includes a silicone-containing chemical. Hydrogel materials and silicone hydrogel materials, as described in the context of the present disclosure, have an equilibrium water content (EWC) of at least 10% to about 90% (wt/wt). In some embodiments, the hydrogel material or silicone hydrogel material has an EWC from about 30% to about 70% (wt/wt). In comparison, a silicone elastomer material, as described in the context of the present disclosure, has a water content from about 0% to less than 10% (wt/wt). Typically, the silicone elastomer materials used with the present methods or apparatus have a water content from 0.1% to 3% (wt/wt). Examples of suitable lens formulations include those having the following United States Adopted Names (USANs): methafilcon A, ocufilcon A, ocufilcon B, ocufilcon C, ocufilcon D, omafilcon A, omafilcon B, comfilcon A, enfilcon A, stenfilcon A, fanfilcon A, etafilcon A, senofilcon A, senofilcon B, senofilcon C, narafilcon A, narafilcon B, balafilcon A, samfilcon A, lotrafilcon A, lotrafilcon B, somofilcon A, riofilcon A, delefilcon A, verofilcon A, kalifilcon A, and the like.

Alternatively, the lens may comprise, consist essentially of, or consist of a silicone elastomer material. For example, the lens may comprise, consist essentially of, or consist of a silicone elastomer material having a Shore A hardness from 3 to 50. The shore A hardness can be determined using conventional methods, as understood by persons of ordinary skill in the art (for example, using a method DIN 53505). Other silicone elastomer materials can be obtained from NuSil Technology or Dow Chemical Company, for example.

According to a second aspect, the present disclosure provides a method of manufacturing a lens. The method may comprise forming a contact lens. The contact lens includes an optic zone comprising a central region, the central region having a first optical axis, a base radial sagittal power, a centre of curvature that is on the first optical axis, and a diameter that is less than 2.0 mm. The optic zone comprises an annular region comprising a plurality of treatment zones, wherein each treatment zone has a radial sagittal power profile that increases with increasing radial distance from the optical axis.

The lens may include any of the features set out above in respect of the first aspect of the invention.

The method of manufacturing may comprise forming a female mold member with a concave lens forming surface and a male mold member with a convex lens forming surface. The method may comprise filling a gap between the female and male mold members with bulk lens material. The method may further comprise curing the bulk lens material to forms the lens.

The contact lens may be a formed using a lathing process. The lens can be formed by cast molding processes, spin cast molding processes, or lathing processes, or a combination thereof. As understood by persons skilled in the art, cast molding refers to the molding of a lens by placing a lens forming material between a female mold member having a concave lens member forming surface, and a male mold member having a convex lens member forming surface.

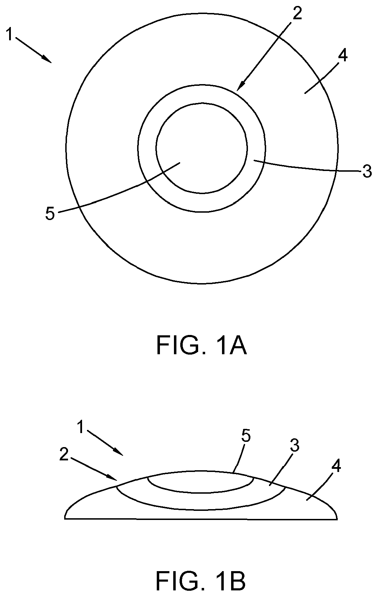

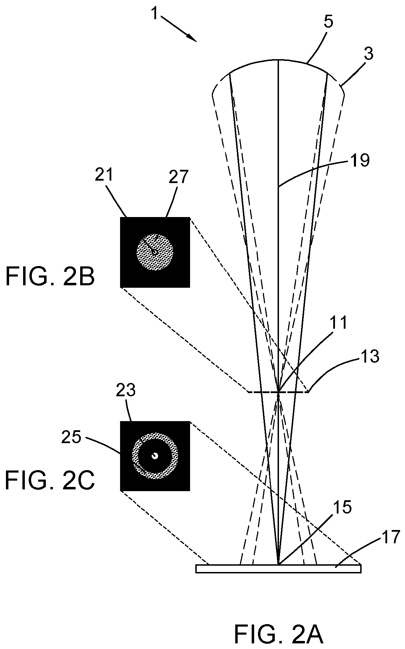

FIG. 1A shows a schematic top view of a prior art lens for use in the slowing progression of myopia (e.g., myopia control). FIG. 1B shows a schematic cross-sectional side view of the lens of FIG. 1A. The lens 1 comprises an optic zone 2, which approximately covers the pupil, and a peripheral zone 4 that sits over the iris. The peripheral zone 4 provides mechanical functions, including increasing the size of the lens thereby making the lens 1 easier to handle, providing ballasting to prevent rotation of the lens 1, and providing a shaped region that improves comfort for the lens 1 wearer. The optic zone 2 provides the optical functionality of the lens 1, and the optic zone 2 comprises an annular region 3 and a central region 5. For this lens 1, the central region 5 has a base curvature power that corresponds to the distance power of the lens 1. The annular region 3 has a greater radial curvature power than the base curvature power of the central region 5. FIG. 2A is a schematic ray diagram showing how the lens 1 of FIGS. 1A-1B focuses light when the lens is positioned on an eye. The focus 11 of the annular region 3 lies on a proximal focal surface 13, and the focus 15 for the central region 5 lies on a distal focal surface 17, which is further away from the posterior surface of the lens 1. The focus 11 of the annular region 3 and the focus 15 of the central region 5 share a common optical axis 19. As shown in FIGS. 2A and 2C, for a point source at infinity, light rays focused by the central region 5 form a focused image 23 at the distal focal surface 17. As shown in FIGS. 2A and 2B, light rays focused by the central region 5 also produce an unfocused blur spot 27 at the proximal focal surface 13.

As shown in FIGS. 2A and 2B, light rays focused by the annular region 3 form a focused, on-axis image 21 at the proximal focal surface 13. Light rays focused by the annular region 3 diverge after the proximal focal surface 13, and, as shown in FIGS. 2A and 2C, the diverging light rays produce an unfocused annulus 25 at the distal focal surface 17. As discussed above, the unfocused annulus 25 image may result in wearers of the lens seeing a 'halo' around focused distance images. The annular region 3 of the lens 1 of FIGS. 1A-2C may be referred to as a co-axial annular region 3, because light rays from a distant point source passing through the annular region 3 are focused to a spot on the optical axis 19.

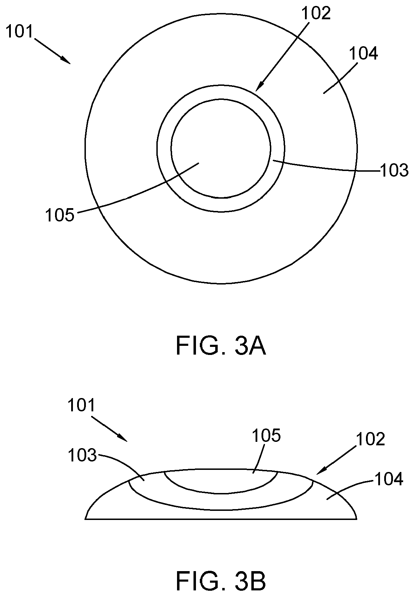

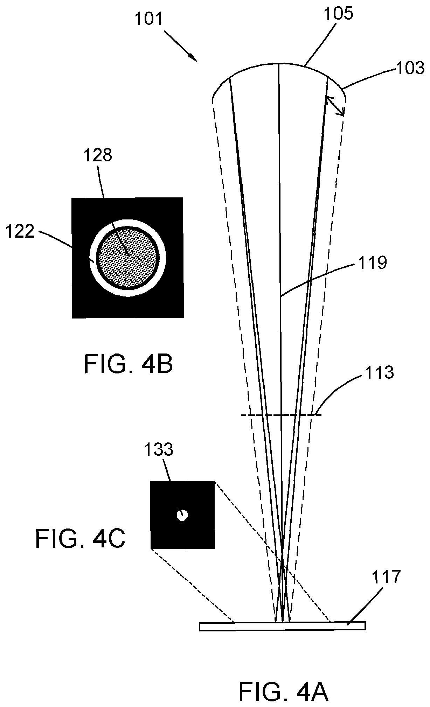

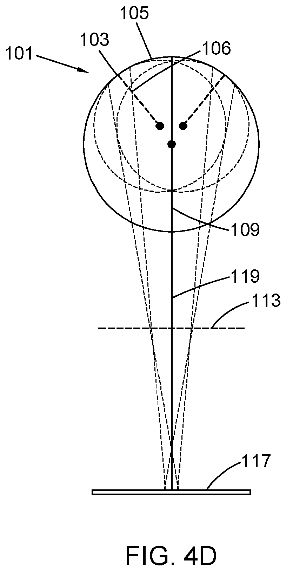

FIG. 3A and 3B shows a schematic top view of another known lens 101. Similar to the lens 1 shown in FIGS. 1A and 1B the lens 101 comprises an optic zone 102 and a peripheral zone 104 surrounding the optic zone 102. The optic zone 102 comprises a central region 105 and a first annular region 103 that surrounds the central region 105. As shown in Fig. 4A and 4D, the central region 105 has a centre of curvature that is on an optical axis 119. The first annular region 103 is radially tilted relative to the central region 105, and the first annular region 103 has an off-axis centre of curvature that is a first distance from the optical axis 119. The anterior surface of the first annular region 103 has a greater curvature than the anterior surface of the central region 105, and therefore provides a greater curvature power than the base curvature power of the central region 105. FIG. 4D is a partial ray diagram for the lens 101 of FIGS. 3A-B, when the lens 101 is positioned on an eye, together with circles indicating the radii of curvature of the central distance region (solid circle) and the annular add region (dashed circle) of the lens 101. As shown in FIG. 4D, the anterior surface of the central region 105 defines a portion of a surface of a sphere of larger radius 109. The anterior surface of the annular region 103 defines a curved annular surface with smaller radius 106.

FIGS. 4A and 4C shows a light pattern at a distal focal surface 117 of the lens of FIGS. 3A-B formed from a distant point source, when the lens 101 is positioned on an eye. At the distal focal surface 117 light rays passing through the central region 105 are focused. Light rays passing through the midpoints of the width of the annular region 103 converge at the same point as the light rays passing though the central region 105 are focused. The annular region 103 acts as an optical beam stop, which leads to a small spot 133 of light at the distal focal surface 117.

FIG. 4B shows a light pattern at a proximal focal surface 113 of the lens 101 of FIGS. 3A-B formed from a distant point source, when the lens 101 is positioned on an eye. A single image is not formed at the proximal focal surface 113. At the proximal focal surface 113, for a point source at infinity, light rays passing through the central region 105 generate a blur circle 128. However, light rays from a distant point source passing through the annular region 103 generate an annular ring 122, as shown in FIG. 4B, which surrounds the blur circle 128. FIG. 4B shows the light pattern generated for a distant point source.

In contrast to the lens 1 of FIGS. 1A and 1B, the lens 101 of FIGS. 2A and 2B does not generate a single image or an on-axis image at the proximal focal surface 113 that could be used to avoid the need for the eye to accommodate for near objects. For an extended object at distance, the image formed at the proximal focal surface 113 is a convolution of (i) the focused image of the extended object that would be obtained with a conventional lens having the optical power of the annular region and (ii) an optical transfer function representing the optical effect of the annular region 103.

In contrast to the prior art lens of FIGS. 1A and 1B, an annulus or 'halo' effect does not occur at the distal focal surface 117. The annular region 103 of the lens 101 of FIGS. 3A-B may be referred to as a non-coaxial annular region 103, or an off-axis annular region 103, because light rays from a distant point source passing through the annular region 103 are not focused at a spot on the optical axis 119.

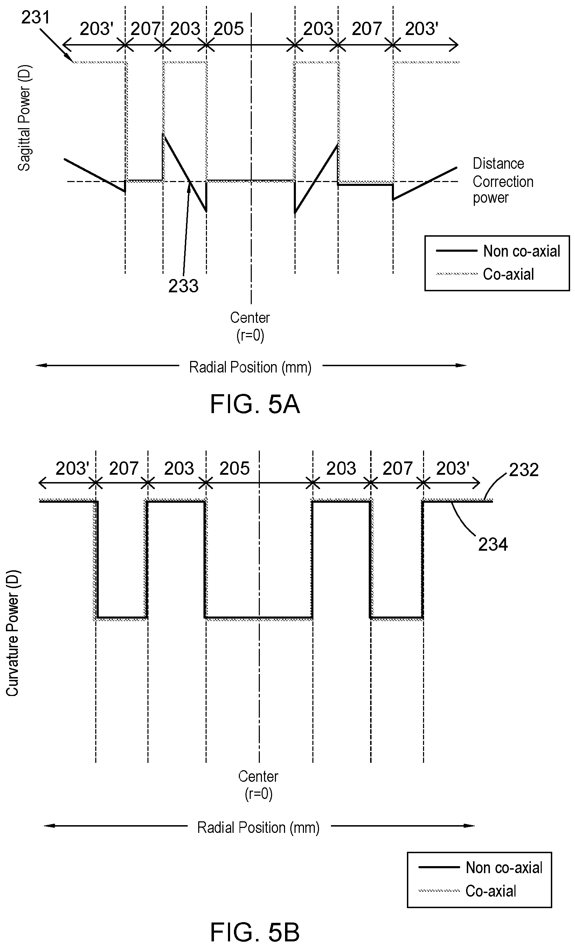

FIG. 5A shows a comparison between a radial sagittal power profile 231 (dashed line) of a lens having two co-axial, or on-axis add power annular regions spanning widths 203, 203' (i.e., annular regions that focus light from a distant point source towards a spot on the optical axis), and a radial sagittal power profile 233 (solid line) of a lens having two non-coaxial or off-axis add power annular regions, spanning widths 203, 203' (i.e. annular regions that do not focus light towards a spot on the optical axis). FIG. 5B shows a corresponding comparison of a radial curvature profile 232 (dashed line) of a lens having two co-axial add power annular regions spanning widths 203 and 203', and a radial curvature power profile 234 (solid line) of a lens having two non-coaxial add power annular regions spanning widths 203, 203'. The radial sagittal power and radial curvature power in Dioptres (D) is plotted as a function of radial distance from the centre of the lenses (r=0). Both lenses have a flat radial sagittal profile and radial curvature power spanning a central region 205. At the boundary of the central region 205 and the first annular region 203, for the on-axis, or co-axial lens, there is a sharp increase in the radial sagittal power 231 and a sharp increase in the radial curvature power 232; the radial sagittal power profile 231 and radial curvature power profile 232 are constant across the width of the annular region 203. At the boundary of the central region 205 and the annular region 203, for the non-coaxial lens, there is a sharp increase in radial curvature power 234, but a sharp decrease in the radial sagittal power 233. The radial sagittal power 233 increases with a constant gradient across the radial width of the annular region 203 for the non-coaxial lens, as a result of the radial tilting of the annular region relative to the central region. At a point halfway across the width of the annular region 203 for the non-coaxial lens, the radial sagittal power 233 matches the radial sagittal power 233 across the central region 205, which corresponds to the distance power of the lens in this case. Both lenses have a second annular region positioned at a greater radial distance from the centre of the lens. Both lenses have the same radial curvature power 232, 234 across both annular regions 203, 203'. For the co-axial lens the radial sagittal power 231 across the width 203' of the second annular region is substantially identical to the radial sagittal power 231 across the first annular region 203. For the non-coaxial lens, less radial sagittal add power is required to achieve the same radial curvature power, and so the gradient of the radial sagittal power profile 233 across the second annular region 203' is less than the gradient across the first annular region 203. Both lenses have a distance power region 207 that has a substantially flat radial sagittal power profile 231, 233 and substantially flat radial curvature power profile 232, 234, in between the first 203 and second 203' annular regions. The radial curvature power 232, 234 across the distance power region 207 matches the radial curvature power 232, 234 across the central region 205.

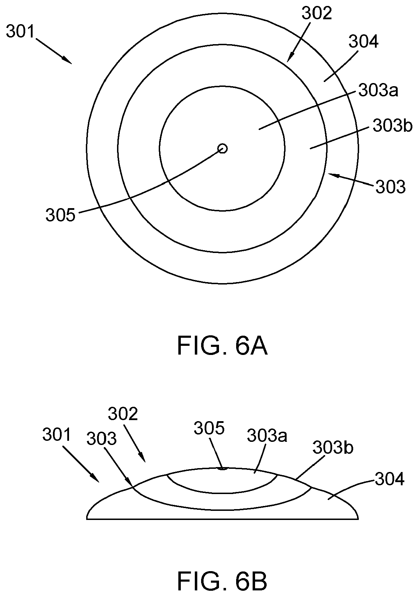

FIG. 6A shows a schematic top view of a lens 301 according to an embodiment of the present disclosure. FIG. 6B shows a schematic cross-sectional view of the lens 301 of FIG. 6A. The lens 301 comprises an optic zone 302, which approximately covers the pupil, and a peripheral zone 304 that sits over the iris. The peripheral zone 304 provides mechanical functions, including increasing the size of the lens thereby making the lens 301 easier to handle, providing ballasting to prevent rotation of the lens 301, and providing a shaped region that improves comfort for the lens 301 wearer. The optic zone 302 provides the optical functionality of the lens 301. The optic zone 302 comprises a small central region 305 having a diameter of 0.5 mm, and an annular region 303 surrounding the central region 305. The annular region 303 comprises two concentric treatment zones 303a, 303b. Each treatment zone 303a, 303b is radially tilted relative to the central zone 305. Each treatment zone 303a, 303b provides a radial curvature add power. For this lens 301, the radial curvature add power results from a greater curvature of the anterior surface of the lens 301. The inner treatment zone 303a, has a low radial curvature add power, and the outer treatment zone 303b has a high radial curvature add power.

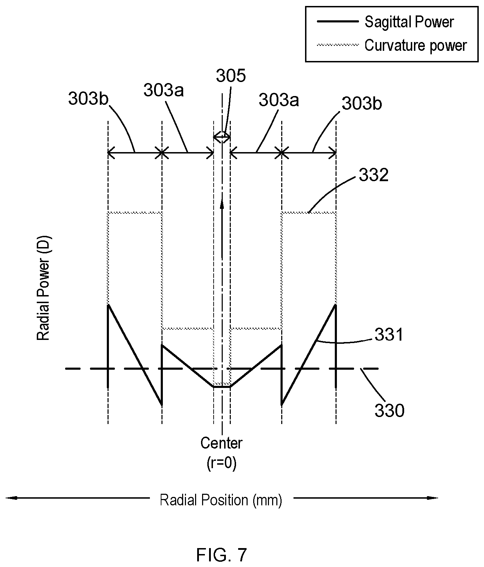

FIG. 7 shows the radial sagittal power profile 331 and the radial curvature power profile 332 taken along a radial diameter of the lens 301 shown in FIGS. 6A and 6B. Across the width of the central region 305, the radial sagittal power profile 331 is flat. Across the width of the central region 305, the radial sagittal power 331 is equal to the radial curvature power 332. For the lens 601 of FIG. 6A and 6B, the radial sagittal power 331 and radial curvature power 332 across the central region 305 are more negative than the nominal distance power of the lens (indicated by the dashed line 330).

At the boundary between the central zone 305 and the inner treatment zone 303a, there is an increase in radial curvature power 332. The inner treatment zone 303a has a greater curvature than the central zone 305 and therefore provides a radial add curvature power. The radial curvature power 332 is approximately constant across the width of the inner treatment zone 303a. At the boundary between the inner treatment zone 303a and the outer treatment zone 303b, there is another sharp increase in the radial curvature power 332. The outer treatment zone 303b has a greater curvature than the innermost treatment zone 303a and provides a greater radial curvature add power.

Across the inner treatment zone 303a, the radial sagittal power 331 increases with a constant positive gradient. At a point halfway across the radial width of each treatment zone 303a, 303b, the radial sagittal power 331 matches the nominal distance power of the lens 303. The gradient of the radial sagittal power profile 331 across the outer treatment zone 303b is greater than the gradient across the inner treatment zone 303a.

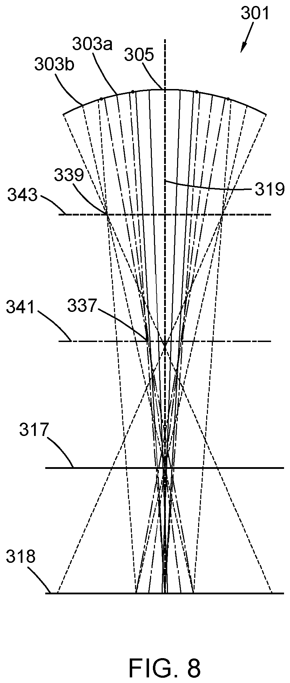

FIG. 8 is a schematic partial ray diagram (not to scale) showing how the treatment zones 303a, 303b of the lens 301 of FIGS. 6A and 6B focus light when the lens 301 is positioned on the eye. Light from a distant point source passing through the small central zone 305 is focused towards a spot on the optical axis 319 at a central zone focal surface 318. The inner treatment zone 303a and outer treatment zone 303b are both radially tilted relative to the central zone 305, and therefore light from a distant point source passing through the treatment zones 303a, 303b is not focused towards a single spot on the optical axis 319. Light rays from a distant point source that pass through the radial midpoint of each treatment zone 303a, 303b converge at a convergence surface 317 that intersects the optical axis 319, and is positioned posterior to the lens 301 when the lens 301 is positioned on the eye. This convergence surface 317 is the best distal focal surface, and determines, to a first approximation the nominal distance power of the lens 301. For the lens 301 of FIGS. 6A-6B, the nominal distance power is greater than the radial curvature power of the central region 305, and therefore the best distal focal surface is anterior in the eye compared to the central zone focal surface 318.

For the lens 301 shown in FIGS. 6A and 6B, each treatment zone 303a, 303b has a radial curvature power that is greater than the nominal distance power and the radial curvature power of the central region 305. Light from a distant point source that passes through the treatment zones 303a, 303b is therefore focused towards surfaces 341, 343 that are anterior in the eye compared to the nominal distance focal surface 317 and the central zone focal surface 318. The radial curvature power profile is approximately constant across the width of each treatment zone 303a, 303b.

The innermost radial treatment zone 303a has a low radial curvature add power. The focal surface 341 for light rays from a distant point source passing through this treatment zone 303a is therefore shifted closer to the lens 301 than the distal focal surface 317. This inner treatment zone 303a is radially tilted relative to the central zone 305, and light rays from a distant point source passing through this treatment zone 303a are therefore not focused towards a single spot on the optical axis 319. Instead, light rays from a distant point source passing through the innermost treatment zone 303a form an annular ring 337 at a low add focal surface 341.

The outer treatment zone 303b, which is positioned adjacent to the inner treatment zone 303a, at a greater radial distance from the optical axis 319, has a high radial curvature add power, which is greater than the radial curvature add power of the inner treatment 303a. This outer treatment zone 303b therefore focuses light from a distant point source towards a high add focal surface 343 that is closer to the lens 301 compared to the distal focal surface 317 and compared to the low add focal surface 341. The outer treatment zone 303b is also tilted relative to the central zone 305, and so light from a distant point source passing through the second treatment zone 303b is not focused towards a spot on the optical axis 319, but instead forms an annular ring 339 at the high add focal surface 343.

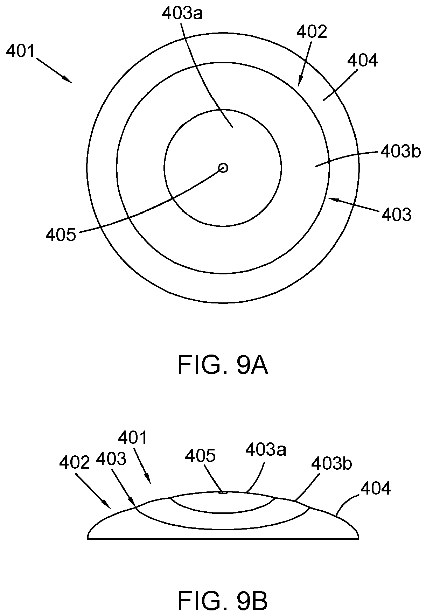

FIG. 9A shows a schematic top view of a lens 401 according to another embodiment of the present disclosure. FIG. 9B shows a schematic cross-sectional view of the lens of FIG. 9A. The lens 401 comprises an optic zone 402, which approximately covers the pupil, and a peripheral zone 404 that sits over the iris. The peripheral zone 404 provides mechanical functions, including increasing the size of the lens 401 thereby making the lens 401 easier to handle, providing ballasting to prevent rotation of the lens 401, and providing a shaped region that improves comfort for the lens 401 wearer. The optic zone 402 provides the optical functionality of the lens 401. The optic zone 402 comprises a small central region 405 having a diameter of 0.5 mm, and an annular region 403 surrounding the central region 405. The annular region 403 comprises two concentric treatment zones 403a, 403b. Both treatment zones 403a, 403b are radially tilted relative to the central zone 405. Both treatment zones 403a, 403b have a radial curvature power that is greater than the radial curvature power of the central zone 405, and greater than the nominal distance power of the lens 401. For this lens 401, each treatment zone 403a, 403b provides the same radial curvature add power relative to the central region 405.

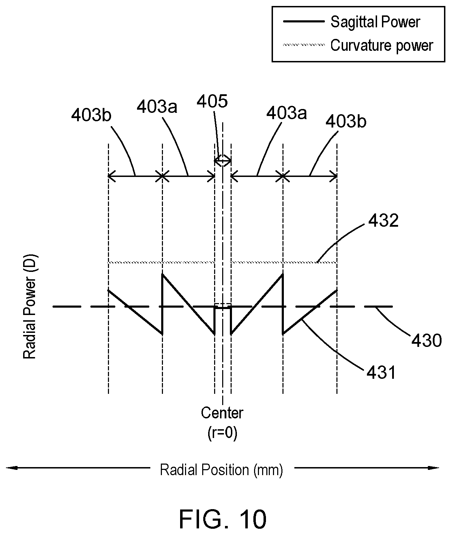

FIG. 10 shows the radial sagittal power profile 431 and radial curvature power profile 432 taken along a radial diameter of the lens 401 shown in FIGS. 9A and 9B. Across the width of the central region 405, the radial sagittal power profile 431 and radial curvature profile 432 are flat. Across the width of the central region 405, the radial sagittal power 431 is equal to the radial curvature power 432, and this may hereafter be referred to as the base power. For the lens 401 of FIG. 9A and 9B, the base power is equal to the nominal distance power of the lens (indicated by the dashed line 430).

At the boundary between the central zone 405 and the inner treatment zone 403a, there is a sharp increase in the radial curvature power 432. The inner treatment zone 403a has a greater curvature than the central zone 405 and therefore provides a radial add curvature power. The radial curvature power 432 is constant across the width of the innermost treatment zone 403a. At the boundary between the inner treatment zone 403a and the outer treatment zone 403b, there is no change in the radial curvature power 432. The outer treatment zone 403b has the same radial curvature add power as the inner treatment zone 403a.

At the boundary between the central zone 405 and the inner treatment zone 403a, there is a sharp decrease in the radial sagittal power 431, and across the inner treatment zone 403a, the radial sagittal power 431 increases with a constant positive gradient. At the boundary between the inner treatment zone 403a and the outer treatment zone 403b, there is another sharp decrease in the radial sagittal power 431. The gradient of the radial sagittal power profile 431 is smaller across the outer treatment zone 403b, because at greater radial distances from the optical axis, a smaller radial sagittal power is required to produce the same radial curvature power.

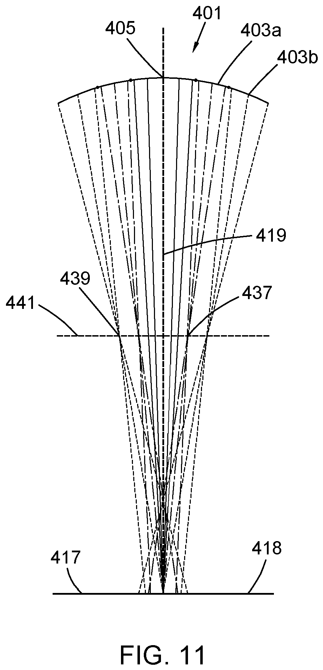

FIG. 11 is a schematic partial ray diagram (not to scale) showing how the treatment zones 403a, 403b, of the lens 401 of FIGS. 9A and 9B focus light when the lens 401 is positioned on the eye. Light from a distant point source passing through the small central zone 405 is focused towards a spot on the optical axis 419 at a central zone focal surface 418. The inner treatment zone 403a and outer treatment zone 403b are both radially tilted relative to the central zone 405, and therefore light from a distant point source passing through the treatment zones 403a, 403b is not focused towards a single spot on the optical axis 419. Light rays from a distant point source that pass through the radial midpoint of each treatment zone 403a, 403b converge at a convergence surface 417 that intersects the optical axis 419, and is positioned posterior to the lens 401 when the lens 401 is positioned on the eye. This convergence surface 417 is the best distal focal surface, and determines, to a first approximation the nominal distance power of the lens 401. For the lens 401 of FIGS. 9A-9B, the best distal focal surface coincides with the central zone focal surface 418.

For the lens 401 shown in FIGS. 9A and 9B, both treatment zones 403a, 403b have the same radial curvature add power. As a result of the radial curvature add power, light from a distant point source that passes through treatment zone 403a or treatment zone 403b, is focused at an add power focal surface 441 that is closer to the lens 401 than the distal focal surface 417.

This innermost treatment zone 403a is radially tilted relative to the central zone 405, and light rays from a distant point source passing through this treatment zone 403a are therefore not focused towards a single spot on the optical axis 419. Instead, as shown in FIG. 11, light rays from a distant point source passing through the innermost treatment zone 403a form an annular ring 437 at an add power focal surface 441.

The outer treatment zone 403b is also tilted relative to the central zone 405 and relative to the inner treatment zone. Light from a distant point source passing through the outer treatment zone 403b is not focused towards a spot on the optical axis 419, but instead forms an annular ring 439 at the add power focal surface 441. As the outer treatment zone 403b is positioned at a greater radial distance from the optical axis than the inner treatment zone 403a, and as the relative radial tilts of the inner 403a and outer 403b treatment zones are different, the diameter of the annular ring 439 formed from light passing through the outer treatment zone 403b is greater than the diameter of the annular ring 437 formed from light passing through the inner treatment zone 403a.

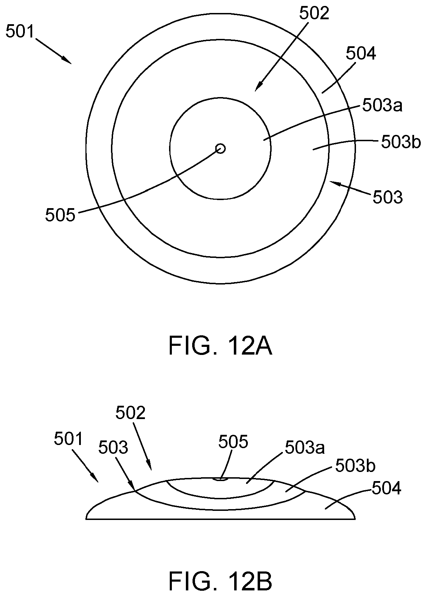

FIG. 12A shows a schematic top view of a lens 501 for use in the slowing progression of myopia (e.g., myopia control) according to another embodiment of the present disclosure. FIG. 12B shows a schematic cross-sectional view of the lens 501 of FIG. 12A. The lens 501 comprises an optic zone 502, which approximately covers the pupil, and a peripheral zone 504 that sits over the iris. The peripheral zone 504 provides mechanical functions, including increasing the size of the lens thereby making the lens 501 easier to handle, providing ballasting to prevent rotation of the lens 501, and providing a shaped region that improves comfort for the lens 501 wearer. The optic zone 502 provides the optical functionality of the lens 501. The optic zone 502 comprises a small central region 505 having a diameter of 0.5 mm, and an annular region 503 surrounding the central region 505. The annular region 503 comprises two concentric treatment zones 503a, 503b. Both of the treatment zones 503a, 503b are radially tilted relative to the central zone 505, and both treatment zones 503a, 503b provide a radial curvature add power relative to the central region 505 and relative to the nominal distance power of the lens 505.

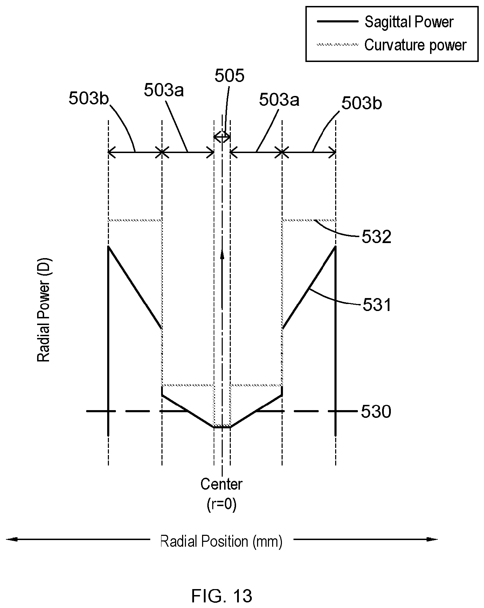

FIG. 13 shows the radial sagittal power profile 531 and radial curvature power profile 532 taken along a radial diameter of the lens 501 shown in FIGS. 12A and 12B. Across the width of the central region 505, the radial sagittal power profile 531 and radial curvature power profile 532 are flat. Across the width of the central region 505, the radial sagittal power 531 is equal to the radial curvature power 532. For the lens 501 of FIG. 12A and 12B, the radial sagittal power 531 and radial curvature power 532 across the central region 505 is more negative than the nominal distance power of the lens (indicated by the dashed line 530).

Both of the treatment zones 503a, 503b have a radial curvature power 532 that is greater than the nominal distance power. At the boundary between the central zone 505 and the inner treatment zone 503a, there is a sharp increase in the radial curvature power profile 532. The inner treatment zone 503a has a greater curvature than the central zone 505 and the nominal distance power of the lens 501 and therefore provides a radial add curvature power. The radial curvature power 532 is constant across the width of the innermost treatment zone 503a. At the boundary between the inner treatment zone 503a and the outer treatment zone 503b, there is a further increase in the radial curvature power 532. The outer treatment zone 503b has a greater radial curvature add power than the inner treatment zone 503a.

Across the innermost treatment zone 503a, the radial sagittal power 531 increases with a constant positive gradient. The outer treatment zone 503b has been tilted relative to the central region 505 and the inner treatment zone 503a, and the radial sagittal power 531 is greater across the width of the outer treatment zone 503 than across the width of the inner treatment zone 503a. Across the width of the outer treatment zone 503b, the radial sagittal power 531 increases with a constant gradient. Across the width of the outer treatment zone 503b, the radial curvature power 532 of the outer treatment zone is greater than the radial sagittal power 531.

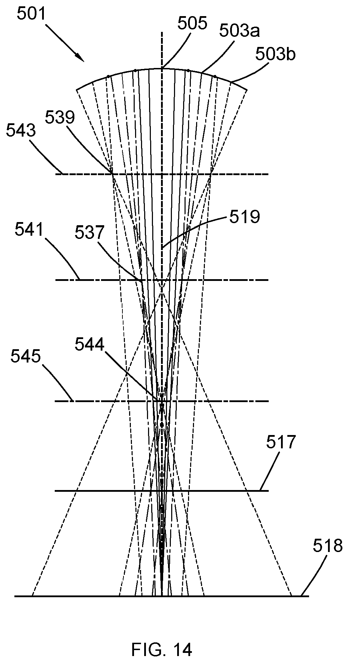

FIG. 14 is a schematic partial ray diagram (not to scale) showing how the treatment zones 503a, 503b, of the lens 501 of FIGS. 12A and 12B focus light when the lens 501 is positioned on the eye. Light from a distant point source passing through the small central zone 505 is focused towards a spot on the optical axis 519 at a central zone focal surface 518. The inner treatment zone 503a and outer treatment zone 503b are both radially tilted relative to the central zone 505, and therefore light from a distant point source passing through the treatment zones 503a, 503b is not focused towards a single spot on the optical axis 519. Light rays from a distant point source that pass through the radial midpoint of the treatment zones 503a, 503b converge at a convergence surface 517 that intersects the optical axis 519, and is positioned posterior to the lens 501 when the lens 501 is positioned on the eye. The convergence surface 517 is the best distal focal surface, and determines, to a first approximation, the nominal distance power of the lens 501. For the lens 501 of FIGS. 12A-12B, the nominal distance power is less negative than the radial curvature power of the central region 505, and therefore the best distal focal surface 517 is closer to the lens 501 than the central zone focal surface 518.

For the lens 501 shown in FIGS. 12A and 12B, the inner treatment zone 503a has a radial curvature power that is greater than the nominal distance power and the radial curvature power of the central region 505, but less than the radial curvature power of the outer treatment zone 503b. As a result, light from a distant point source that passes through the inner treatment zone 503a is focused towards a low add power focal surface 541 that is closer to the lens 501 than the distal focal surface 517 and the central zone focal surface 518. The inner treatment zone 503a is radially tilted relative to the central zone 505 and so light from a distant point source passing through the inner treatment zone 503a forms an annular ring 537 at the low add power focal surface 541. The outer treatment zone 503b is tilted relative to the central region 505 and the inner treatment zone 503a, and the outer treatment zone 503b has a radial sagittal power across its width that is greater than the radial sagittal power across the inner treatment zone 503a. Light rays from a distant point source that pass through the radial midpoint of the outer treatment zone 503b (i.e., a point halfway across the radial width of the outer treatment zone 503b) converge at a point 544 on the optical axis at a sagittal add power convergence surface 545. Light rays from a distant point source that passes through the outer treatment zone 503b are focused towards a high add power focal surface 543 that is closer to the lens 501 than the low add power focal surface 541, the distal focal surface 517 and the central zone focal surface 518. The outer treatment zone 503b is radially tilted relative to the central zone 505 and so light from a distant point source passing through the outer treatment zone 503b forms an annular ring 539 at the high add power focal surface 541.

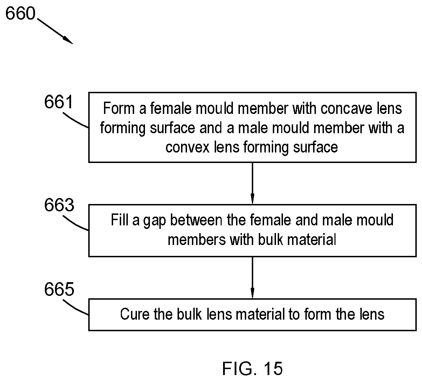

FIG. 15 is a flowchart showing a method 660 of manufacturing a contact lens, according to an embodiment of the present disclosure. The contact lens includes an optic zone comprising a central region, the central region having a first optical axis, a base radial sagittal power, a centre of curvature that is on the first optical axis, and a radial diameter that is less than 0.5 mm. The optic zone comprises an annular region comprising a plurality of treatment zones, wherein each treatment zone has a radial sagittal power profile that increases with increasing radial distance from the optical axis. The lens may include any of the features set out above. In a first step 661 the method comprises forming a female mold member with a concave lens forming surface and a male mold member with a convex lens forming surface. In a second step 663, the method comprises filling a gap between the female and male mold members with bulk lens material. In a third step 665, the method comprises curing the bulk lens material to form the lens.

In alternative embodiments of the present disclosure, the lens may be formed using a lathing process, a cast molding processes, spin cast molding processes, or lathing processes, or a combination thereof.

It will be appreciated by those of ordinary skill in the art that features of these example embodiments may be combined in other embodiments that fall within the scope of the present disclosure.

In the example embodiments of the present disclosure described in FIGS. 6A-14 above, the contact lenses include two concentric treatment zones. In other embodiments, the contact lens may include more than two concentric treatment zones. For example, the contact lens may include between two and ten concentric treatment zones. In the example embodiments of the present disclosure described in FIGS. 6A-14 above, the treatment zones have approximately the same radial width. In other embodiments, the treatment zones may have different radial widths.

In embodiments of the present disclosure, the coaxial regions and non-coaxial regions of the contact lens may have the same curvature power. In other embodiments, the coaxial regions and non-coaxial regions of the contact lens may have different curvature powers.

## Claims

1. A contact lens, the lens including an optic zone comprising:
   a central region having a base power to provide distance correction, the central region having a first optical axis, a centre of curvature that is on the first optical axis, and a diameter that is less than 1.0 mm; and
   an annular region comprising a plurality of concentric treatment zones that are adjacent to each other and have a radial slope power profile that increases with increasing radial distance from the optical axis wherein at a point halfway across the radial widths of all of the treatment zones the radial slope power matches the base power of the central region to provide distance correction.

2. A contact lens according to claim 1, wherein at least two of the treatment zones have different radial slope power profiles.

3. A contact lens according to claim 1 or claim 2, wherein the annular region comprises between 2 and 10 concentric treatment zones.

4. A contact lens according to any preceding claim, wherein each of the plurality of concentric treatment zones has a different radial slope power profile.

5. A contact lens according to any preceding claim, wherein each treatment zone has a radial width of between about 0.1 and 2.5 mm.

6. A contact lens according to any preceding claim, wherein each treatment zone has a radial slope power gradient of between about 0.5 D/mm and about 20.0 D/mm.

7. A contact lens according to any preceding claim, having a nominal distance power, determined by the position of a best distal focal surface, of between +0.5 D and -15.0 D.

8. A contact lens according to claim 7, wherein at least one treatment zone has a radial curvature power that is greater than the nominal distance power of the lens.

9. A contact lens according to claim 7, wherein each treatment zone has a radial curvature power that is greater than the nominal distance power of the lens.

10. A contact lens according to any of claims 7-9, wherein the radial curvature power of the central region is equal to the nominal distance power.

11. A contact lens according to any of claims 7-9, wherein the nominal distance power of the lens is greater than the radial curvature power of the central region.

12. A contact lens according to any of claims 7-8, or claims 10-11, wherein alternate concentric treatment zones provide higher radial curvature powers and lower radial curvature powers, wherein the higher radial curvature power is greater than the nominal distance power of the lens.

13. A contact lens according to claim 12, wherein the lower radial curvature power is greater than the nominal distance power of the lens.

14. A contact lens according to any of claims 7-10, or claim 12, wherein each treatment zone provides a radial curvature add power of between +2.0 D and 10.0 D.

15. A contact lens according to any preceding claim, wherein the radial curvature power of each treatment zone results from the curvature of an anterior surface and/or a posterior surface of the lens.

16. The contact lens according to any preceding claim, wherein the lens comprises an elastomer material, a silicone elastomer material, a hydrogel material, or a silicone hydrogel material, or mixtures thereof.

17. A method of manufacturing a contact lens, the method comprising: forming a contact lens according to any preceding claim.

**Patentansprüche**

1. Kontaktlinse, umfassend eine optische Zone, die aufweist:

   einen zentralen Bereich mit einer Basisstärke zur Fernkorrektur, wobei der zentrale Bereich eine erste optische Achse, einen auf der ersten optischen Achse liegenden Krümmungsmittelpunkt und einen Durchmesser von weniger als 1,0 mm aufweist; und
   einen ringförmigen Bereich mit einer Vielzahl von konzentrischen Behandlungszonen, die aneinandergrenzen und ein Stärkeprofil mit radialer Steigung aufweisen, das mit zunehmendem radialem Abstand von der optischen Achse ansteigt, wobei an einem Punkt mittig der radialen Erstreckung aller Behandlungszonen der Stärkewert der radialen Steigung der Basisstärke des zentralen Bereichs entspricht, um eine Fernkorrektur bereitzustellen.

2. Kontaktlinse nach Anspruch 1, wobei mindestens zwei der Behandlungszonen unterschiedliche Stärkeprofil mit radialer Steigung aufweisen.

3. Kontaktlinse nach Anspruch 1 oder 2, wobei der ringförmige Bereich zwischen 2 und 10 konzentrische Behandlungszonen aufweist.

4. Kontaktlinse nach einem der vorhergehenden Ansprüche, wobei jede der mehreren konzentrischen Behandlungszonen ein unterschiedliches Stärkeprofil mit radialer Steigung aufweist.

5. Kontaktlinse nach einem der vorhergehenden Ansprüche, wobei jede Behandlungszone eine radiale Breite zwischen etwa 0,1 und 2,5 mm aufweist.

6. Kontaktlinse nach einem der vorhergehenden Ansprüche, wobei jede Behandlungszone eine radiale Steigung der Stärke zwischen etwa 0,5 D/mm und etwa 20,0 D/mm aufweist.

**7.** Kontaktlinse nach einem der vorhergehenden Ansprüche, mit einer durch die Position einer besten distalen Fokusfläche bestimmten Nenn-Fernstärke zwischen + 0,5 D und - 15,0 D.

**8.** Kontaktlinse nach Anspruch 7, wobei mindestens eine Behandlungszone eine radiale Krümmungsstärke aufweist, die größer ist als die Nenn-Fernstärke der Kontaktlinse.

**9.** Kontaktlinse nach Anspruch 7, wobei jede Behandlungszone eine radiale Krümmungsstärke aufweist, die größer ist als die nominale Fernstärke der Kontaktlinse.

**10.** Kontaktlinse nach einem der Ansprüche 7 bis 9, wobei die radiale Krümmungsstärke des zentralen Bereichs gleich der Nenn-Fernstärke ist.

**11.** Kontaktlinse nach einem der Ansprüche 7 bis 9, wobei die Nenn-Fernstärke der Kontaktlinse größer ist als die radiale Krümmungsstärke des zentralen Bereichs.

**12.** Kontaktlinse nach einem der Ansprüche 7 bis 8 oder nach einem der Ansprüche 10 bis 11, wobei abwechselnde konzentrische Behandlungszonen höhere Radialkrümmungsstärken und niedrigere Radialkrümmungsstärken aufweisen, wobei die höhere Radialkrümmungsstärke größer ist als die Nenn-Fernstärke der Kontaktlinse.

**13.** Kontaktlinse nach Anspruch 12, wobei die niedrigere Radialkrümmungsstärke größer ist als die Nenn-Fernstärke der Kontaktlinse.

**14.** Kontaktlinse nach einem der Ansprüche 7 bis 10 oder nach Anspruch 12, wobei jede Behandlungszone eine Addition der radialen Krümmungsstärke zwischen +2,0 D und 10,0 D aufweist.

**15.** Kontaktlinse nach einem der vorhergehenden Ansprüche, wobei die radiale Krümmungsstärke jeder Behandlungszone aus der Krümmung einer vorderen Oberfläche und/oder einer hinteren Oberfläche der Kontaktlinse resultiert.

**16.** Kontaktlinse nach einem der vorhergehenden Ansprüche, wobei die Kontaktlinse ein Elastomermaterial, ein Silikonelastomermaterial, ein Hydrogelmaterial oder ein Silikon-Hydrogelmaterial oder Mischungen davon aufweist.

**17.** Verfahren zur Herstellung einer Kontaktlinse, wobei das Verfahren aufweist: Bilden einer Kontaktlinse nach einem der vorhergehenden Ansprüche.

**Revendications**

**1.** Lentille de contact, la lentille comprenant une zone optique comprenant :

une région centrale présentant une puissance de base destinée à fournir une correction de la vision de loin, la région centrale présentant un premier axe optique, un centre de courbure qui est situé sur le premier axe optique, et un diamètre qui est inférieur à 1,0 mm ; et
une région annulaire comprenant une pluralité de zones de traitement concentriques qui sont adjacentes les unes aux autres et présentent un profil de puissance à pente radiale qui augmente avec l'augmentation de la distance radiale par rapport à l'axe optique, dans laquelle, en un point situé à mi-chemin entre les largeurs radiales de toutes les zones de traitement, la puissance à pente radiale correspond à la puissance de base de la région centrale pour fournir une correction de la vision de loin.

**2.** Lentille de contact selon la revendication 1, dans laquelle au moins deux des zones de traitement présentent des profils de puissance à pente radiale différents.

**3.** Lentille de contact selon la revendication 1 ou la revendication 2, dans laquelle la région annulaire comprend entre 2 et 10 zones de traitement concentriques.

**4.** Lentille de contact selon une quelconque revendication précédente, dans laquelle chacune de la pluralité de zones de traitement concentriques présente un profil de puissance à pente radiale différent.

**5.** Lentille de contact selon une quelconque revendication précédente, dans laquelle chaque zone de traitement présente une largeur radiale comprise entre environ 0,1 et 2,5 mm.

6.  Lentille de contact selon une quelconque revendication précédente, dans laquelle chaque zone de traitement présente un gradient de puissance à pente radiale compris entre environ 0,5 D/mm et environ 20,0 D/mm.

7.  Lentille de contact selon une quelconque revendication précédente, présentant une puissance nominale pour vision de loin, déterminée par la position d'une surface focale distale optimale, comprise entre +0,5 D et -15,0 D.

8.  Lentille de contact selon la revendication 7, dans laquelle au moins une zone de traitement présente une puissance de courbure radiale qui est supérieure à la puissance nominale pour vision de loin de la lentille.

9.  Lentille de contact selon la revendication 7, dans laquelle chaque zone de traitement présente une puissance de courbure radiale qui est supérieure à la puissance nominale pour vision de loin de la lentille.

10. Lentille de contact selon l'une quelconque des revendications 7 à 9, dans laquelle la puissance de courbure radiale de la région centrale est égale à la puissance nominale pour vision de loin.

11. Lentille de contact selon l'une quelconque des revendications 7 à 9, dans laquelle la puissance nominale pour vision de loin est supérieure à la puissance de courbure radiale de la région centrale.

12. Lentille de contact selon l'une quelconque des revendications 7 à 8 ou des revendications 10 à 11, dans laquelle des zones de traitement concentriques alternées fournissent des puissances de courbure radiale plus élevées et des puissances de courbure radiale plus faibles, dans laquelle la puissance de courbure radiale plus élevée est supérieure à la puissance nominale pour vision de loin de la lentille.

13. Lentille de contact selon la revendication 12, dans laquelle la puissance de courbure radiale plus faible est supérieure à la puissance nominale pour vision de loin de la lentille.

14. Lentille de contact selon l'une quelconque des revendications 7 à 10 ou selon la revendication 12, dans laquelle chaque zone de traitement fournit une puissance d'ajout de courbure radiale comprise entre +2,0 D et 10,0 D.

15. Lentille de contact selon une quelconque revendication précédente, dans laquelle la puissance de courbure radiale de chaque zone de traitement résulte de la courbure d'une surface antérieure et/ou d'une surface postérieure de la lentille.

16. Lentille de contact selon une quelconque revendication précédente, la lentille comprenant un matériau élastomère, un matériau élastomère de silicone, un matériau hydrogel ou un matériau hydrogel de silicone, ou un de leurs mélanges.

17. Procédé de fabrication d'une lentille de contact, le procédé comprenant :
    la formation d'une lentille de contact selon une quelconque revendication précédente.

FIG. 1A

FIG. 1B

FIG. 2B

FIG. 2C

FIG. 2A

FIG. 3A

FIG. 3B

FIG. 4B

FIG. 4C

FIG. 4A

FIG. 4D

FIG. 5A

FIG. 5B

FIG. 6A

FIG. 6B

FIG. 7

FIG. 8

FIG. 9A

FIG. 9B

FIG. 10

FIG. 11

FIG. 12A

FIG. 12B

FIG. 13

FIG. 14

660

661  Form a female mould member with concave lens forming surface and a male mould member with a convex lens forming surface

663  Fill a gap between the female and male mould members with bulk material

665  Cure the bulk lens material to form the lens

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022296361 A1